# EUROPEAN PATENT SPECIFICATION

(11) **EP 1 806 381 B1**
(45) Date of publication and mention of the grant of the patent: **06.05.2009**
(21) Application number: 06766503.4
(22) Date of filing: 08.06.2006
(51) Int. Cl.: C08L 9/02, C08L 15/00, C09K 3/10, C08L 21/00

(54) **RUBBER BLEND COMPOSITION**
KAUTSCHUKMISCHUNGSZUSAMMENSETZUNG
COMPOSITION DE MÉLANGE DE CAOUTCHOUC

(30) Priority: 10.06.2005 JP 2005170823
(43) Date of publication of application: 11.07.2007
(73) Proprietor: NOK Corporation, Minato-ku Tokyo 105-8585 (JP)
(72) Inventor: KUNIEDA, Kenichi C/O NOK CORPORATION,, Kanagawa 2510042 (JP)
(74) Representative: Ziebig, Marlene
(86) International application number: PCT/JP2006/311541
(87) International publication number: WO 2006/132325

(56) References cited:
- EP-A- 0 552 620
- EP-A- 0 674 121
- EP-A- 0 890 610
- EP-A- 1 245 629
- JP-A- 03 000 748
- JP-A- 05 186 609
- JP-A- 06 190 973
- JP-A- 07 076 060
- JP-A- 2000 017 110
- JP-A- 2001 032 845
- JP-A- 2003 322 262
- US-A- 5 731 371
- US-A- 6 153 686
- US-A1- 2003 181 558

## Description

### Technical field

The present invention relates to a sealing material characterized by a blended rubber composition.

### Background art

NBR is a synthetic rubber of copolymer system of acrylonitrile and butadiene , and it is known to be excellent in low-temperature durability, oil resistance and mold ability. As such, NBR is used as sealing materials such as oil seals, O-rings, packing, etc. in various areas including the automobile industry, the industrial machinery industry, etc.

In recent years, application of NBR to pressure-withstanding, slidable or maneuverable products has been studied; however, oil seals made from NBR may break in certain cases due to shortage of strength and wear resistance of NBR, resulting in oil leakage.

It was difficult to get a sufficient wear resistance even when carbon black was compounded with NBR in large quantity to improve the wear resistance.

On the other hand, the non-patent documents land 2 report that the rubber made by means of blending hydrogenated acrylonitrile-butadiene rubber (HNBR), which is a product resulting from selective hydrogenation of only double bond part of NBR, with ZnO and methacrylic acid (MMA) and crosslinking it with peroxide is high in strength and hardness.

The rubber obtained from such polymer alloy is very excellent in strength and wear resistance indeed, but it has a problem in that it is defective in mold lubricity; therefore, it is not suited to be sealing materials.

Non-patent document 1: Saito, Y., Fujino, A., Ikeda, A. : SAE Technical Parer Series, 890359 (1989)
Non-patent document 2: Rubber Industry Handbook, 4th edition (1994), p.99, edited by The Society of Rubber Industry, Japan

Patent document 1: Japanese Unexamined Patent Application Publication No. 2001-032845, in which NBR is used for pressure-withstanding O-ring seal.
Patent document 2: Unexamined Patent Application Publication No. 2000-017110, in which NBR rubber composition is used for seals for vehicles' shock absorbers and assures its slidability.

EP 1 245 629 A2 describes a blended rubber composition comprising a mixture of 40 wt-% of an acrylonitrile/butadiene rubber and 60 wt-5 of a polymer alloy which is the product produced from zinc dimethacrylate and hydrogenated nitrile rubber which is used as a shear ply.

Rubber compositions are further known from US 2003/0181558 A1, EP 0 890 610 A1, EP 0 552 620 A2, US 6 153 686 A and EP 0 674 121 A1.

It is an object of the present invention to provide sealing material made from a blended rubber composition which is easy to mold and excellent in wear resistance.

### Disclosure of invention

The objects of the present invention will be solved by the following inventions:

The invention as claimed in claim 1 is a sealing material used for one or more of pressure-withstanding, slidable or maneuverable sealing parts characterized by a blended rubber composition comprising a mixture of acrylonitrile-butadiene rubber (NBR) and polymer alloy, which is a product produced by mixed dispersion of methacrylic acid (MMA) into hydrogenated nitrile rubber (HNBR), blended at the rates of 90 - 10 wt. % to 10 - 90 wt. %.

The invention as claimed in claim 2 is a sealing material according to claim 1, wherein the said polymer alloy is obtained from dispersion into hydrogenated nitrile rubber (HNBR) of components selected from either methacrylic acid (MMA) plus metal zinc or zinc compound, or zinc polymethacrylate.

The invention as claimed in claim 3 is a sealing material according to claim 1 or 2, wherein the said polymer alloy has CN contents at the ratios of 18 - 44 wt. % and iodine numbers of 7 - 56mg/100mg.

### Effects of the invention

According to the invention as claimed in claim 1, 2 or 3, the sealing material uses a blended rubber composition excellent in wear resistance and mold lubricity.

According to the invention as claimed, the sealing material is excellent in sealing effect.

According to the invention as claimed, the sealing material is effective used for one or more of pressure-withstanding, slidable or maneuverable parts.

### The best mode for carrying out the invention

The mode for carrying out the present invention is described as follows:

Acrylonitrile-butadiene rubber having acrylonitrile content ratios of 15 to 48% and preferably of 15 to 35% can be used as NBR in the present invention; therefore, low nitrile content ratios of 15 to 24%, medium nitrile content ratios of 25 to 30% and/or nitrile content ratios of 31 to 35%, which is slightly higher than medium, are preferably usable.

The polymer alloy used in the present invention is made from mixed dispersion of methacrylic acid (MMA) into hydrogenated nitrile rubber (HNBR). The said polymer alloy is preferably obtained by means of mixed dispersion of components selected from either methacrylic acid (MMA) plus metal zinc or zinc compound (e.g. zinc oxide), or zinc polymethacrylate into hydrogenated nitrile rubber (HNBR).

Mixed dispersion can be made by means of a mixer, a homogenizer, a supersonic dispersing device, etc. and dispersion is made preferably to a high degree.

The said polymer alloy preferably has CN content ratios of 18 to 44 wt. % and iodine numbers of 7 to 56mg/100mg. CN content ratios and iodine numbers within the said range are preferable because effect of improvement in wear resistance can be obtained.

Such polymer alloy is on the market by the name of Zeoforte-ZSC 2395 or ZSC 2295, etc. manufactured by Zeon Corporation.

In the present invention, compounding ratios of NBR and polymer alloy are 90 - 10 wt. % to 10 - 90 wt. % in a blended rubber composition for the inventive sealing material. If NBR content ratio exceeds 90 wt. % and polymer alloy content ratio falls below 10 wt. %, mold lubricity will be maintained, but wear resistance will be lost, while if NBR content ratio falls below 10 wt. % and polymer alloy content ratio exceeds 90 wt. %, wear resistance will be maintained, but mold lubricity will be lost.

The blended rubber composition is made to add, as appropriate, if necessary, vulcanization agents (e.g. inorganic type vulcanization agents such as sulfur, sulfur monochloride, selenium and tellurium; organic type vulcanization agents such as sulfur containing compounds, dithiocarbamates and oximes; organic peroxides such as dicumyl peroxide, 2,5-dimethyl-2,5-di(t-butylperoxy)hexane, benzoylperoxide, dilauroylperoxide and 1,3-di(t-butylperoxyisopropyl)benzen), vulcanization accelerator activator (e.g. metal oxides such as zinc oxide, active zinc oxide, surface treatment zinc oxide, complex zinc oxide and magnesium oxide; metal carbonate such as zinc carbonate; metal hydroxide such as calcium hydroxide; organic type activators such as stearic acid, etc.), vulcanization accelerators (e.g. sulfenamide type and thiuram type), antioxidants (e.g. amine type and phenol type, etc.), softeners and plasticizers (e.g. paraffinic oil softeners, aromatic oils and naphthenic oils, etc.), reinforcing agents or fillers (e.g. carbonblack and silica, etc.), processing aids (e.g. lubricants such as stearic acid, etc.), and to be kneaded by means of a kneader, an open roll mill, etc.

The kneaded product is vulcanized commonly by means of pressing cure conducted at about 150 to 200°C for about 3 to 60 minutes. The vulcanized product is vulcanized commonly by means of oven vulcanization at about 100 to 180 °C for about 0.5 to 5 hours, then the secondary vulcanized product is formed.

The blended rubber composition which is formed is used as one or more of pressure-withstanding, slidable or maneuverable sealing materials. It is noted that sealing materials include both of static sealing materials and dynamic sealing materials.

### Examples

The effects of the present invention are illustrated by examples as follows:

(Components used)
NBR ("JSR N251H", a product of JSR)
Combined acrylonitrile content ratio: 24%, Mooney viscosity: ML₁₊₄(100°C) 88
Polymer alloy ("ZSC 2395", a product of Zeon Corporation)
SRF carbon black
Zinc oxide
Stearic acid
Thioester ("KOS-2", a product of Osaka Organic Chemical Industry Ltd.)
Amine/ketone type antioxidant RD (" NOCRAC 224", a chemical product of Ouchishinko Chemical Industrial Co., Ltd.)
Alkyl aryl paraphenylene diamine type antioxidant 3C (" NOCRAC 810NA", a chemical product of Ouchishinko Chemical Industrial Co., Ltd.)
Paraffin wax (melting point: 75°C or higher)
Sulfur
Thiazole type vulcanization accelerator DM (" NOCCELER DM-P", a chemical product of Ouchishinko Chemical Industrial Co., Ltd.)
Dithiocarbamate type vulcanization accelerator BZ (" NOCCELER BZ-P", a chemical product of Ouchishinko Chemical Industrial Co., Ltd.)
"Perbutyl P" (a product of NOF Corporation)

The components were kneaded with a kneader and an open roll mill at the compound ratios shown in Table 1 and vulcanized with a heat press at 180°C for 10 minutes, and then, provided with a secondary vulcanization in an oven at 150°C for 30 minutes to get test pieces (blended rubber composition).

The test pieces were used for measurement of properties in a original state and for testing of wear resistance.

### (Testing and evaluation)

### Evaluation of wear resistance by means of wear resistance testing method

A surface nature measuring machine manufactured by Shinto Scientific Co., Ltd. was used to reciprocate a SUS steel friction ball of 0.4mmø and 450g load 400 times at a travel speed of 400mm/min for a travel distance of 30mm, and then a surface roughness/type tester manufactured by Toyo Precision Parts Mfg. Co., Ltd. was used to determine the ten-point roughness height average R_{z}, and after the testing, wear resistance was evaluated by wear depth according to the following criteria:

### Evaluation criteria

⊚: Wear depth: 30µm or less
○:Wear depth: 30 to 40µm
Δ:Wear depth: 40 to 50µm
×:Wear depth: 50µm or more

### Evaluation of mold lubricity

Mold lubricity of vulcanized test pieces was evaluated with a heat press under conditions of 170°C and 20 minutes according to the following criteria:

### Evaluation criteria

⊚: Best
○: Better
Δ: Good
×: Bad
⊚ or ○ will satisfy required functions.

**Table 1**

| | Practical Example | | | | | | Comparative Example | | |
|---|---|---|---|---|---|---|---|---|---|
| | 1 | 2 | 3 | 4 | 5 | 6 | 1 | 2 | 3 |
| NBR (JSR N251 H) | 90 | 80 | 70 | 50 | 30 | 10 | 100 | 100 | - |
| ZSC (ZSC2395) | 10 | 20 | 30 | 50 | 70 | 90 | - | - | 100 |
| SRF carbon | 150 | 130 | 110 | 80 | 55 | 30 | 175 | 80 | 10 |
| IISAF carbon | - | - | - | - | - | - | - | 65 | - |
| zinc oxide | 5 | 5 | 5 | 5 | 5 | 5 | 5 | 5 | 5 |
| stearic acid | 2 | 2 | 2 | 2 | 2 | 2 | 2 | 2 | 2 |
| thioester | 15 | 15 | 15 | 15 | 15 | 15 | 15 | 15 | 15 |
| antioxidant RD | 1 | 1 | 1 | 1 | 1 | 1 | 1 | 1 | 1 |
| antioxidant 3C | 1 | 1 | 1 | 1 | 1 | 1 | 1 | 1 | 1 |
| paraffin wax | 1 | 1 | 1 | 1 | 1 | 1 | 1 | 1 | 1 |
| sulfur | 0.4 | 0.4 | 0.4 | 0.4 | 0.4 | 0.4 | 0.4 | 0.4 | - |
| vulcanization accelerator DM | 3.3 | 3.3 | 3.3 | 3.3 | 3.3 | 3.3 | 3.3 | 3.3 | - |
| vulcanization accelerator BZ | 1.5 | 1.5 | 1.5 | 1.5 | 1.5 | 1.5 | 1.5 | 1.5 | - |
| organic peroxide Perbutyl P | 2 | 2 | 2 | 2 | 2 | 2 | 2 | 2 | 2 |
| original state Hs (duroA) | 94 | 94 | 94 | 94 | 94 | 94 | 94 | 94 | 94 |
| Tb | 23.0 | 24.8 | 26.9 | 29.4 | 32.6 | 34.2 | 17.1 | 22.3 | 35.0 |
| Eb | 90 | 100 | 110 | 120 | 130 | 140 | 80 | 110 | 150 |
| resurt of wear resistance test | ○ | ⊚ | ⊚ | ⊚ | ⊚ | ⊚ | Δ | × | ⊚ |
| mold lubricity | ⊚ | ⊚ | ⊚ | ⊚ | ⊚ | ○ | ⊚ | ⊚ | × |

## Claims

1. A sealing material used for one or more of pressure-withstanding, slidable and maneuverable parts **characterized by** a blended rubber composition comprising a mixture of acrylonitrile-butadiene rubber (NBR) and polymer alloy, which is a product produced by mixed dispersion of methacrylic acid (MMA) into hydrogenated nitrile rubber (HNBR), blended at the rates of 90 - 10 wt. % to 10 - 90 wt. %.

2. Sealing material according to claim 1, wherein the said polymer alloy is obtained from dispersion into hydrogenated nitrile rubber (HNBR) of components selected from either methacrylic acid (MMA) plus metal zinc or zinc compound, or zinc polymethacrylate.

3. Sealing material according to claim 1 or 2, wherein the said polymer alloy has CN content ratios of 18 to 44 wt. % and iodine numbers of 7 to 56 mg/100 mg.

## Patentansprüche

1. Dichtungsmaterial, das für ein oder mehrere druckbeständige, gleitfähige und bewegliche Teile verwendet wird, **gekennzeichnet durch** eine gemischte Kautschuk-Zusammensetzung, umfassend eine Mischung aus Acrylnitril-Butadien-Kautschuk (NBR) und Polymerlegierung, wobei diese ein Produkt ist, das hergestellt wird **durch** Mischdispergieren von Methacrylsäure (MMA) in hydrierten Nitril-Kautschuk (HNBR), die in Anteilen von 90 - 10 Gew.-% bis 10 - 90 Gew.-% gemischt werden.

2. Dichtungsmaterial nach Anspruch 1, wobei die Polymerlegierung erhalten wird durch Dispergieren von Komponenten, die ausgewählt sind aus Methacrylsäure (MMA) mit metallischem Zink oder einer Zink-Verbindung oder Zinkpolymethacrylat, in hydrierten Nitril-Kautschuk (HNBR).

3. Dichtungsmaterial nach Anspruch 1 oder 2, wobei die Polymerlegierung einen CN-Gehalt von 18 bis 44 Gew.-% und eine Iod-Zahl von 7 bis 56 mg/100 mg aufweist.

## Revendications

1. Matériau d'étanchéité utilisé pour une ou plusieurs pièces résistantes à la pression, coulissantes et manoeuvrables, **caractérisé par** une composition de caoutchouc mélangé comprenant un mélange de caoutchouc acrylonitrile (NBR) et d'alliage de polymères, qui est un produit fabriqué par une dispersion mélangée d'acide méthacrylique (MMA) dans du caoutchouc nitrile hydrogéné (HNBR), mélangé à des taux de 90 - 10 % en poids à 10 - 90 % en poids.

2. Matériau d'étanchéité selon la revendication 1, dans lequel ledit alliage de polymère est obtenu à partir d'une dispersion dans du caoutchouc nitrile hydrogéné (HNBR) de composants sélectionnés parmi de l'acide méthacrylique (MMA) additionné de zinc métal ou d'un composé de zinc, ou du polyméthacrylate de zinc.

3. Matériau d'étanchéité selon la revendication 1 ou 2, dans lequel ledit alliage de polymères a des ratios de teneur CN de 18 à 44 % en poids et des indices d'iode de 7 à 56 mg/100 mg.
